# EUROPÄISCHE PATENTSCHRIFT

(11) **EP 2 256 352 B1**
(45) Veröffentlichungstag und Bekanntmachung des Hinweises auf die Patenterteilung: **05.10.2011**
(21) Anmeldenummer: 09161240.8
(22) Anmeldetag: 27.05.2009
(51) Int. Cl.: F15B 15/20

(54) **Spielfrei-Vorrichtung mit vereinfachter Fluidströmungsverbindung für eine Anhängerkupplung**
Device free of clearance with simplified fluid flow connection for a trailer connection
Dispositif sans jeu doté d'une liaison d'écoulement de fluide simplifiée pour un attelage

(43) Veröffentlichungstag der Anmeldung: 01.12.2010
(73) Patentinhaber: Jost-Werke GmbH, 63263 Neu-Isenburg (DE)
(72) Erfinder: Szczepanek, Udo, 82223 Eichenau (DE)
(74) Vertreter: Trossin, Hans-Jürgen

(56) Entgegenhaltungen:
- DE-A1-102006 060 788
- FR-A- 2 740 734

## Beschreibung

Die vorliegende Anmeldung betrifft eine Spielfrei-Vorrichtung für eine Anhängerkupplung zur spielfreien Anlage einer Kupplungsgeometrie an einen diese formschlüssig ankuppelnden Kupplungsbolzen, die Spielfrei-Vorrichtung umfassend: ein Fluidreservoir mit einem darin aufgenommenen inkompressiblen Fluid, eine Arbeitskammer mit einem darin beweglich aufgenommenen Arbeitskolben, einen längs einer Bewegungsachse beweglichen Differenzkolben mit einer Kolben-Reservoirfläche, auf welche ein reservoirseitiger Fluiddruck nach Maßgabe des im Fluidreservoir herrschenden Fluiddrucks einwirkt, um eine in einer ersten Bewegungsrichtung längs der Bewegungsachse auf den Differenzkolben wirkende erste Bewegungskraft zu erzeugen, und mit einer.von der Kolben-Reservoirfläche abweichenden, vorzugsweise kleineren Kolben-Arbeitsfläche, welche durch einen arbeitskammerseitigen Fluiddruck nach Maßgabe des in der Arbeitskammer herrschenden Fluiddrucks beaufschlagbar ist, um eine in einer der ersten entgegengesetzten zweiten Bewegungsrichtung auf den Differenzkolben wirkende zweite Bewegungskraft zu erzeugen, eine die Arbeitskammer und das Fluidreservoir miteinander fluidströmungsmäßig verbindende Fluidströmungsverbindung mit einer Ventilanordnung, welche zumindest im abschnittsweisen Zusammenwirken mit dem Differenzkolben dazu ausgebildet ist, dann, wenn der reservoirseitige Fluiddruck wenigstens ein vorbestimmtes erstes Maß höher ist als der arbeitskammerseitige Fluiddruck, eine Fluidströmung von dem Fluidreservoir in die Arbeitskammer zu gestatten, sowie dann, wenn der arbeitskammerseitige Fluiddruck wenigstens ein vorbestimmtes zweites Maß höher ist als der reservoirseitige Fluiddruck, eine Fluidströmung von der Arbeitskammer in das Fluidreservoir zu gestatten, und ansonsten eine Fluidströmung in der Fluidströmungsverbindung zwischen Arbeitskammer und Fluidreservoir im Wesentlichen zu unterbinden.

Eine derartige Spielfrei-Vorrichtung, welche beispielsweise an Lastkraftwägen dazu eingesetzt wird, um bei einem Zugbetrieb aus Zugfahrzeug und Nachlauffahrzeug eine möglichst dauerhafte Spielfreiheit zwischen den formschlüssig miteinander gekuppelten Kupplungselementen von Zugfahrzeug und Nachlauffahrzeug zu gewährleisten, ist aus der DE10 2006 060788 A bekannt.

Verbesserungsfähig an der bekannten Spielfrei-Vorrichtung ist zum einen ihr verhältnismäßig aufwändiger Aufbau, da sie gesonderte Fluidströmungsleitungen für eine Fluidströmung von dem Fluidreservoir zur Arbeitskammer einerseits und von den Arbeitskammer zum Fluidreservoir andererseits aufweist.

Ein herkömmliches Rückschlagventil sorgt in der einen Fluidströmungsleitung immer dann, wenn der Fluiddruck im Fluidreservoir höher ist als in der Arbeitskammer, dafür, dass Fluid vom Fluidreservoir zur Arbeitskammer strömt.

In der anderen Fluidströmungsleitung ist der Differenzkolben als Ventil ausgebildet. Er ist mit O-Ringdichtungen gegen ein Überströmen von Fluid von der einen Seite aus Fluidreservoirseite und Arbeitskammerseite zur jeweils anderen Seite hin geschützt. Dabei kommt es vor allen Dingen darauf an, einen zwischen der Kolben-Reservoirfläche und der Kolben-Arbeitsfläche gelegenen Bewegungsraum des Differenzkolbens möglichst frei von dem inkompressiblen Fluid zu halten, um die betriebsnotwendige Bewegungsmöglichkeit des Kolbens aufrecht zu erhalten.

Dieses Freihalten des Bewegungsraums des Differenzkolbens von inkompressiblem Fluid gelingt über längere Betriebszeit mit den vorgesehenen O-Ringdichtungen nur unvollständig, weshalb bei der bekannten Spielfrei-Vorrichtung eine Drainageleitung vorgesehen ist, welche einen Abfluss von inkompressiblem Fluid aus dem Bewegungsraum gewährleistet.

Die Kolben-Reservoirfläche und die Kolben-Arbeitsfläche sind in ihren Flächeninhalten derart bemessen, dass eine Fluidströmung von der Arbeitskammer zum Fluidreservoir erst dann einsetzt, wenn der Druck in der Arbeitskammer um ein vorbestimmtes zweites Maß höher ist als der Druck im Fluidreservoir.

Zu einer derartigen Erhöhung des Fluiddrucks in der Arbeitskammer kommt es in der Regel dann, wenn ein Zug aus Zugfahrzeug und Nachlauffahrzeug verzögert wird, da dann aufgrund der Trägheit der Masse das Nachlauffahrzeug - selbst wenn dieses über einen eigenen Bremskreislauf verfügt - dynamische Kräfte auf ein mit dem Arbeitskolben kraftübertragend verbundenes Stoppprisma überträgt, welche dynamischen Kräfte über den Arbeitskolben den Fluiddruck in der Arbeitskammer erhöhen.

Ganz allgemein funktionieren derartige Spielfrei-Vorrichtungen nach dem folgenden Prinzip:
Ausgehend von einem drucklosen Zustand sowohl im Fluidreservoir als auch in der Arbeitskammer der Spielfrei-Vorrichtung wird eine Systemkraft, etwa auf Grundlage eines an Lastkraftwagen stets vorhandenen Pneumatiksystems, auf das Fluidreservoir ausgeübt. Dadurch steigt der Fluiddruck im Fluidreservoir.

Übersteigt der Fluiddruck im Fluidreservoir um ein vorbestimmtes erstes Maß, das auch Null sein kann, den Fluiddruck in der Arbeitskammer, strömt Fluid aus dem Fluidreservoir über die Fluidströmungsverbindung in die Arbeitskammer und verlagert dort den beweglichen Arbeitkskolben so lange, bis ein Stoppprisma, welches einenends mit dem Arbeitskolben und anderenends mit der Kupplungsgeometrie, etwa einer Zugöse, verbunden ist, die Kupplungsgeometrie spielfrei an einen die Kupplungsgeometrie formschlüssig ankuppelnden Kupplungsbolzen in Anlage gebracht hat.

In diesem Zustand kann der aus Zugfahrzeug und daran angekuppeltem Nachlauffahrzeug gebildete Zug spielfrei beschleunigen und sich gleichförmig bewegen.

Wird der Zug verzögert, wirken die zuvor genannten vom Nachlauffahrzeug ausgehenden dynamischen Kräfte der von Arbeitskolben und Stoppprisma ausgeübten Anlagekraft entgegen und erhöhen so den Fluiddruck in der Arbeitskammer. Der Fluiddruck in der Arbeitskammer steigt also bis zu einer vorbestimmten Obergrenze an.

Übersteigt der Fluiddruck in der Arbeitskammer die vorbestimmte Obergrenze, also übersteigt genauer der Fluiddruck in der Arbeitskammer den Fluiddruck im Fluidreservoir um das vorbestimmte zweite Maß, gestattet die Ventilanordnung unter Aufgabe der zuvor erzeugten Spielfreiheit eine Fluidströmung von der Arbeitskammer zurück ins Fluidreservoir. Dadurch wird der Fluiddruck in der Arbeitskammer abgebaut.

Mit dem Ende einer Verzögerung des Zugs enden auch die vom Nachlauffahrzeug über das Stoppprisma auf den Arbeitskolben einwirkenden Verzögerungskräfte, so dass der Arbeitskolben wieder im Sinne einer Vergrößerung eines von ihm begrenzten Fluidvolumens in der Arbeitskammer bewegbar ist. Dadurch sinkt der Fluiddruck in der Arbeitskammer. Sobald der durch die Systemkraft erzeugte Fluiddruck im Fluidreservoir wieder um das vorbestimmte erste Maß höher ist als der Fluiddruck in der Arbeitskammer, kommt es erneut zu der oben beschriebenen spielfreien Anlage der Kupplungsgeometrie an den Kupplungsbolzen.

Aufgabe der vorliegenden Erfindung ist es, die bekannte Spielfrei-Vorrichtung des Standes der Technik ausgehend von den zuvor genannten Nachteilen zu verbessern.

Diese Aufgabe wird gelöst durch eine Spielfrei-Vorrichtung der gattungsgemäßen Art, bei welcher die Fluidströmungsverbindung einen betriebsmäßig sowohl vom Fluidreservoir zur Arbeitskammer hin als auch von der Arbeitskammer zum Fluidreservoir hin durchströmbaren Leitungsabschnitt umfasst, in welchem ein Ventilsitz und eine mit dem Ventilsitz zusammenwirkende Ventilgeometrie eines Ventilkörpers der Ventilanordnung aufgenommen sind.

Dadurch kann ein einziger Leitungsabschnitt sowohl für eine Fluidströmung vom Fluidreservoir zur Arbeitskammer hin als auch in die umgekehrte Richtung verwendet werden, wobei die Ventilanordnung die Fluidströmung in beiden Strömungsrichtungen nach den eingangs genannten Kriterien steuern kann.

Daher reicht das Vorsehen einer einzigen Fluidströmungsverbindungsleitung in der erfindungsgemäßen Spielfrei-Vorrichtung aus, so dass nicht wie im Stand der Technik für jede Strömungsrichtung eine eigene Leitung vorgesehen werden muss.

Im folgenden sollen einige für das Verständnis der vorliegenden Erfindung wesentliche Begriffe erläutert werden, die in der vorliegenden Anmeldung verwendet werden:
Wenn ausgesagt ist, dass auch die Kolben-Reservoirfläche ein reservoirseitiger Fluiddruck nach Maßgabe des im Fluidreservoir herrschenden Fluiddrucks einwirkt, so bedeutet dies, dass entweder der im Fluidreservoir herrschende Fluiddruck unmittelbar auf die Kolben-Reservoirfläche einwirkt, oder dass ein durch Druckminderer, Druckverstärker und dergleichen veränderter, jedoch mit dem Fluiddruck im Fluidreservoir in ursächlichem Zusammenhang stehender reservoirseitiger Fluiddruck auf die Kolben-Reservoirfläche einwirkt.

Entsprechendes gilt für die Kolben-Arbeitsfläche, den arbeitskammerseitigen Fluiddruck und den in der Arbeitskammer herrschenden Fluiddruck.

Wenn in der vorliegenden Anmeldung davon die Rede ist, dass die Kolben-Arbeitsfläche durch einen Fluiddruck beaufschlagbar ist, so soll dies die Fälle umfassen, dass ein Fluiddruck wenigstens vorübergehend unmittelbar auf die Kolben-Arbeitsfläche einwirkt, oder dass ein Fluiddruck wenigstens vorübergehend auf ein Bauteil einwirkt, das kraftübertragend mit der Kolben-Arbeitsfläche verbunden oder verbindbar ist.

Wenn in der vorliegenden Anmeldung ausgesagt ist, dass die Ventilanordnung zumindest im abschnittsweisen Zusammenwirken mit dem Differenzkolben dazu ausgebildet ist, eine Fluidströmung zwischen Arbeitskammer und Fluidreservoir zu gestatten oder zu unterbinden, so soll dies bedeuten, dass der Differenzkolben hierzu mit der Ventilanordnung zusammenwirken kann, jedoch nicht unbedingt muss ("zumindest im Zusammenwirken"). Weiterhin soll dadurch ausgesagt sein, dass dann, wenn der Differenzkolben mit der Ventilanordnung zur Sicherstellung von deren Funktion zusammenwirkt, dies nicht für alle Strömungsrichtungen gelten muss, sondern es ausreichen kann und in der Regel ausreichen wird, wenn der Differenzkolben nur zur Gewährleistung einer Fluidströmung in eine Richtung mit der Ventilanordnung zusammenwirkt, während die Ventilanordnung zum Gewährleisten oder Unterbinden einer Fluidströmung in die entgegengesetzte Strömungsrichtung nicht mit dem Differenzkolben zusammenwirkt ("abschnittsweise"). Daher ist "abschnittsweise" als "funktionsabschnittsweise" zu verstehen.

Die Spielfrei-Vorrichtung des Standes der Technik weist fluidreservoirseitig einen Reservoirkolben auf, welcher einerseits das Fluidreservoir begrenzt und andererseits mit Pneumatikdruck beaufschlagbar ist. Dabei kann es bei länger dauerndem Betrieb dazu kommen, dass Druckluft von der Pneumatikseite des Reservoirkolbens an der Reservoirkolbendichtung vorbei in das Fluidreservoir eindringt, wodurch die so entstehende Fluidmischung in dem Fluidreservoir aufgrund des dann vorhandenen Gasanteils nicht mehr inkompressibel ist.

Dieser Nachteil der Spielfrei-Vorrichtung des Standes der Technik kann dadurch ausgeräumt werden, dass das Fluidreservoir zumindest abschnittsweise von einer verformbaren Hüllmembran begrenzt ist, deren eine Hüllmembranseite mit dem Fluid benetzt ist und deren entgegengesetzte andere Hüllmembranseite durch eine Systemkraft, vorzugsweise eine pneumatische Systemkraft, beaufschlagt oder wahlweise beaufschlagbar ist.

Die Hüllmembran kann an geeigneter Stelle sehr gut gegen einen Gasdurchgang bzw. Fluiddurchgang abgedichtet sein, während die übrige Hüllmembran abseits der Dichtungsstelle vollständig gasundurchlässig ist.

Zusätzlich oder alternativ kann die bekannte Spielfrei-Vorrichtung auch dadurch verbessert sein, dass der Bewegungsraum des Differenzkolbens besser als bisher gegen einen Eintritt von inkompressiblem Fluid, in der Regel Hydrauliköl, geschützt ist. Dies kann dadurch geschehen, dass zwischen dem Fluid im Fluidreservoir und dem Differenzkolben eine erste Kolbenmembran angeordnet ist, wobei vorzugsweise deren eine Kolbenmembranseite von Fluid benetzt ist und deren entgegengesetzte andere Kolbenmembranseite zur Kolben-Reservoirfläche hinweist, besonders bevorzugt in Berührkontakt mit dieser steht.

Zusätzlich oder vorzugsweise alternativ kann der Eintritt von inkompressiblem Fluid in den Bewegungsraum des Differenzkolbens nicht nur fluidreservoirseitig, sondern auch von der Arbeitskammer her dadurch besser gegen einen unerwünschten Eintritt von inkompressiblem Fluid geschützt sein, dass die Kolben-Arbeitsfläche und insbesondere der den Differenzkolben arbeitsflächenseitig umgebende Spalt durch eine zweite Kolbenmembran bedeckt ist.

Ein wahlweises Gestatten oder Unterbinden einer Fluidströmung zwischen der Arbeitskammer und dem Fluidreservoir kann dadurch realisiert sein, dass der die Ventilgeometrie aufweisende Ventilkörper längs einer Verlagerungsachse verlagerbar ist.

Eine besonders bauraumsparende Konstruktion kann gemäß einer vorteilhaften Weiterbildung der vorliegenden Erfindung dadurch erhalten werden, dass der Ventilkörper von Fluid durchströmbar ist, also auch Teil der Fluidströmungsverbindung ist.

Aus Gründen besonders einfacher Fertigung kann unter Weiterbildung der Erfindung daran gedacht sein, den Ventilkörper rotationssymmetrisch bezüglich einer Rotationssymmetrieachse auszubilden, wobei zum effizienten Betrieb des Ventilkörpers vorteilhafterweise im montierten Zustand des Ventilkörpers die Rotationssymmetrieachse mit der Verlagerungsachse zusammenfallen kann. Dann ist es weiter vorteilhaft, wenn ein im Ventilkörper ausgebildeter Fluiddurchgang sich längs der Verlagerungsachse erstreckt, vorzugsweise sich koaxial zur Verlagerungsachse erstreckt.

Zur Sicherstellung definierter Betriebsstellungen des Ventilkörpers ist in Weiterbildung der Erfindung vorteilhafterweise vorgesehen, dass der Ventilkörper zumindest in seiner Schließstellung, in welcher er mit der Ventilgeometrie an dem Ventilsitz anliegt, an einem definierten Positionsanschlag anliegt. Dieser Positionsanschlag kann vom Ventilsitz selbst oder von einem gesondert vom Ventilsitz ausgebildeten Anschlag ausgebildet sein.

Um den Ventilkörper mit Fluiddrücken nach Maßgabe des im Fluidreservoir herrschenden Fluiddrucks und des in der Arbeitskammer herrschenden Fluiddrucks beaufschlagen zu können und somit druckabhängig eine gewünschte Verlagerungsbewegung des Ventilkörpers zum Gewähren einer Fluidströmung zwischen dem Fluidreservoir und der Arbeitskammer oder zum Unterbinden einer derartigen Fluidströmung einleiten zu können, kann in Weiterbildung der Erfindung vorgesehen sein, dass der Ventilkörper eine Ventil-Reservoirfläche aufweist, auf welche ein reservoirseitiger Fluiddruck nach Maßgabe des im Fluidreservoir herrschenden Fluiddrucks einwirkt, um eine in einer ersten Verlagerungsrichtung längs der Verlagerungsachse auf den Ventilkörper wirkende erste Verlagerungskraft zu erzeugen, und dass der Ventilkörper eine Ventil-Arbeitsfläche aufweist, auf welche ein arbeitskammerseitiger Fluiddruck nach Maßgabe des in der Arbeitskammer herrschenden Fluiddrucks einwirkt, um eine in einer der ersten entgegengesetzten zweiten Verlagerungsrichtung auf den Ventilkörper wirkende zweite Verlagerungskraft zu erzeugen.

Da auf der Fluidreservoirseite niedrigere Maximalfluiddrücke zu erwarten sind, ist es zur Vermeidung unnötig hoher Lasten auf die Ventilgeometrie vorteilhaft, wenn die Ventilgeometrie an der Ventil-Reservoirfläche vorgesehen ist.

Um eine gewünschte Verlagerungsbewegung des Ventilkörpers druckabhängig einleiten zu können, kann aufgrund der unterschiedlichen in der Arbeitskammer und im Fluidreservoir erzielbaren Maximaldrücke vorgesehen sein, dass die Ventil-Reservoirfläche einen von der Ventil-Arbeitsfläche abweichenden Flächeninhalt aufweist. Um das zuvor genannte erste Maß oder/und das vor zweite Maß in betriebsbegünstigender Weise einstellen zu können, hat es sich als vorteilhaft erwiesen, wenn die Ventil-Reservoirfläche einen kleineren Flächeninhalt als die Ventil-Arbeitsfläche aufweist.

Zur Sicherstellung einer definierten Stellung des Ventilkörpers einer Spielfrei-Vorrichtung, bei welcher in der Arbeitskammer und im Fluidreservoir im Wesentlichen derselbe Fluiddruck herrscht, kann der Ventilkörper durch eine Ventilfederanordnung zum Ventilsitz hin vorgespannt sein.

Die zuvor beschriebene vorteilhafte Funktion der Ventilanordnung, eine Fluidströmung in Abhängigkeit von vorbestimmten Druckunterschieden zwischen dem Fluidreservoir und der Arbeitskammer in die eine oder in die andere Richtung zu gestatten oder zu unterbinden, kann mit geringem Bauraumaufwand dadurch realisiert sein, dass der Ventilsitz nach Maßgabe der Stellung des längs der Bewegungsachse beweglichen Differenzkolbens verstellbar ist.

Grundsätzlich kann zwar daran gedacht sein, dass der Differenzkolben, insbesondere dessen Kolben-Arbeitsfläche oder gegebenenfalls die diese und insbesondere den sie umgebenden Spalt bedeckende zweite Kolbenmembran den Ventilsitz bildet oder der Ventilsitz daran ausgebildet oder vorgesehen ist, etwa in Form einer Ventilsitzplatte. Jedoch kann gemäß einer bevorzugten Ausführungsform zum Schutz des Differenzkolbens bzw. der zweiten Kolbenmembran daran gedacht sein, dass zwischen dem Ventilkörper und dem Differenzkolben ein Ventilkolben vorgesehen ist, welcher zur Annäherung an den und zur Entfernung von dem Differenzkolben sowie zur Annäherung an den und zur Entfernung von dem Ventilkörper längs einer Verstellachse verstellbar vorgesehen ist, wobei eine erste Ventilkolbenseite zum Differenzkolben hinweist und eine zweite Ventilkolbenseite zum Ventilkörper hinweist. Besonders bevorzugt ist der Ventilkolben schwimmend gelagert.

Bei Vorsehen der zweiten Kolbenmembran ist der Ventilkolben vorzugsweise zwischen Ventilkörper und zweiter Kolbenmembran in der beschriebenen Art und Weise verstellbar vorgesehen.

Dann kann die Kolben-Arbeitsfläche des Differenzkolbens durch den Ventilkolben mit dem arbeitskammerseitigen Fluiddruck beaufschlagbar sein, so dass der arbeitskammerseitige Fluiddruck nur mittelbar auf die Kolben-Arbeitsfläche, unmittelbar dagegen auf den Ventilkolben einwirkt.

Zur Vermeidung weiterer Bauteile kann dann vorgesehen sein, dass der Ventilsitz an der zweiten Ventilkolbenseite vorgesehen ist. Der Ventilsitz kann grundsätzlich durch die Ventilkolbenseite selbst oder durch eine an die Ventilkolbenseite angebrachte Ventilsitzplatte ausgebildet sein. Dabei ist die Verwendung einer Ventilsitzplatte bevorzugt, da diese den mechanischen Anforderungen entsprechend robust ausgeführt sein kann, während der Ventilkolben selbst mit möglichst geringer bewegter Masse und reibungsarmem Material ausgeführt sein kann.

Vorzugsweise sind die Ventilgeometrie und der an der zweiten Ventilkolbenseite vorgesehene Ventilsitz derart ausgebildet, dass bei auf dem Ventilsitz aufsitzender Ventilgeometrie eine erste Teilfläche der zweiten Ventilkolbenseite mit einem arbeitskammerseitigen Fluiddruck und eine von der ersten verschiedene zweite Teilfläche der zweiten Ventilkolbenseite mit einem reservoirseitigen Fluiddruck beaufschlagt sind.

Eine effiziente Spielfrei-Vorrichtung, bei welcher besonders geringe Betriebskräfte zur Bewegung des Differenzkolbens und zur Verlagerung des Ventilkörpers oder/und zur Verstellung des Ventilkolbens ausreichen, kann dadurch erhalten werden, dass die Bewegungsachse und die Verlagerungsachse oder/und die Verstellachse im Wesentlichen in dieselbe Richtung verlaufen, vorzugsweise kollinear sind.

Die Spielfrei-Vorrichtung kann beispielsweise für Funktionstests der Ventilanordnung eine zu einer vormontierten Baugruppe zusammengefasste Ventilanordnung aufweisen.

Diese zu einer vormontierten Baugruppe zusammengefasste Ventilanordnung kann im einfachsten Fall den Differenzkolben und den Ventilkörper umfassen, welche in einem Gehäuse aufgenommen sind. Das Gehäuse kann zur Erleichterung der Montage mehrteilig ausgeführt sein. Gemäß der obigen Beschreibung kann die vormontierte Baugruppe zusätzlich den oben erwähnten Ventilkolben aufweisen, welcher in der beschriebenen Art und Weise bevorzugt zwischen Differenzkolben und Ventilkörper angeordnet ist.

Zur besseren Abdichtung des Differenzkolbens gegen das auf ihn einwirkende Fluid sind vorzugsweise auch die erste und die zweite Kolbenmembran, zwischen welchen der Differenzkolben angeordnet ist, Teil der vormontierten Baugruppe.

Zur vollen Funktionsfähigkeit umfasst die vormontierte Baugruppe vorteilhafterweise auch die Ventilfederanordnung.

Zusätzlich oder alternativ kann die Baugruppe zur Erhöhung der Standfestigkeit der Ventilanordnung eine Ventilsitzplatte aufweisen, an welcher der Ventilsitz vorzugsweise ausgebildet ist.

Zur Vermeidung eines unnötigen Abdichtungsaufwands kann die zuvor erwähnte Hüllmembran unmittelbar an einer Aufnahmegeometrie des Gehäuses anbringbar und befestigbar sein.

Die vorliegende Erfindung wird nachfolgend anhand der beiliegenden Figur näher erläutert werden. Es stellt dar:
- Figur 1: eine Längsschnittansicht einer erfindungsgemäßen Spielfrei- Vorrichtung für eine Anhängerkupplung.
- Figur 2: eine vergrößerte Darstellung der Ventilanordnung, des Ventilkolbens und des Differenzkolbens der Spielfrei-Vorrichtung von Fig. 1 bei im Wesentlichen druckloser Spielfrei-Vorrichtung, und
- Figur 3: die vergrößerte Darstellung von Fig. 2 dann, wenn der reservoirseitige Fluiddruck den arbeitskammerseitigen Fluiddruck um mindestens das vorbestimmte erste Maß übersteigt.

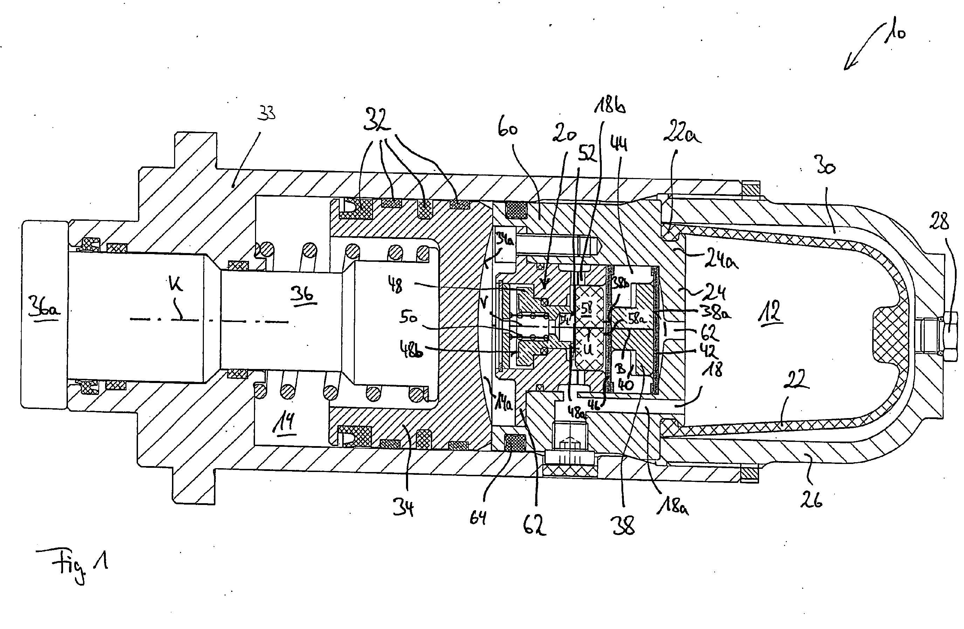

In Fig. 1 ist eine erfindungsgemäße Spielfrei-Vorrichtung in einer Längsschnittansicht allgemein mit 10 bezeichnet.

Diese Spielfrei-Vorrichtung umfasst ein Fluidreservoir 12, eine Arbeitskammer 14, einen Differenzkolben 16 sowie eine das Fluidreservoir 12 und die Arbeitskammer 14 fluidströmungsmäßig miteinander verbindende Fluidströmungsverbindung 18, in welcher eine Ventilanordnung 20 vorgesehen ist.

Das Fluidreservoir 12 ist vorzugsweise durch eine Hüllmembran 22 und eine die Hüllmembran 22 verankernde Ankerscheibe 24 begrenzt. Das durch die Hüllmembran 22 und die Ankerscheibe 24 eingeschlossene Volumen des Fluidreservoirs 12 ist vollständig mit einem inkrompressiblen Fluid, etwa mit einem Hydrauliköl gefüllt.

Das Fluidreservoir 12 ist vorzugsweise von einem Deckel bedeckt, in welchem sich ein Anschluss 28 befinden kann, durch welchen Druckluft von einem Druckluftsystem eines Lastkraftwagens, an welchem die Spielfrei-Vorrichtung 10 angebracht sein kann, in einen Druckluftraum 30 zwischen der Hüllmembran 22 und dem Deckel 26 eingeleitet werden kann. Die Hüllmembran 22 und die Ankerscheibe 24 können sich wechselseitig geometrisch hintergreifen, um so eine Art Labyrinthdichtung zu bilden, welche einen Eintritt von Druckluft aus dem Druckluftraum 30 in das Fluidreservoir 12 stark erschwert oder sogar vollständig verhindert.

Zusätzlich oder alternativ kann der Deckel 26 im Bereich der Verankerung der Hüllmembran 22 an der Ankerscheibe 24 unter Vorspannung eines Verankerungsbereichs 22a der Hüllmembran 22 auf einen Gegenverankerungsbereich 24a der Ankerscheibe 24 zu spaltfrei an der Hüllmembran 22 anliegen und dadurch einen Luftübertritt aus dem Druckluftraum 30 in das Fluidreservoir 12 zusätzlich erschweren. Im Arbeitsraum 14 ist ein über eine Dichtungsanordnung 32 gegenüber einem Arbeitszylinder 33 abgedichteter Arbeitskolben 34 vorzugsweise längs einer Kolbenachse K hin- und herbeweglich aufgenommen. Mit dem Arbeitskolben 34 ist in an sich bekannter Weise ein Stoppprisma 36 in Eingriff, dessen von der Ventilanordnung 20 fern liegendes Längsende 36a im Betrieb für eine spielfreie Anlage einer Kupplungsgeometrie, etwa einer Zugöse, an eine die Kupplungsgeometrie formschlüssig kuppelnde Kupplungsgegengeometrie, etwa einen Kupplungsbolzen, sorgen kann.

Eine zur Ventilanordnung 34 hinweisende Kolbenfläche 34a des Arbeitskolbens 34 grenzt in dem in Fig. 1 gezeigten Beispiel in der Arbeitskammer 14 einen zwischen der Ventilanordnung 20 und dem Arbeitskolben 34 gelegenen Arbeitsraum 14a ab, in den inkompressibles Fluid, welches durch Drucklufteinleitung in den Druckluftraum 30 im Fluidreservoir 12 unter Druck gesetzt worden sein kann, über die Fluidströmungsverbindung 18 durch die Ventilanordnung 20 in den Arbeitsraum 14a strömen kann. Ebenso kann das inkompressible Fluid, unter der Voraussetzung entsprechender Druckverhältnisse, vom Arbeitsraum 14a der Arbeitskammer 14 über die Ventilanordnung 20 und die Fluidströmungsverbindung 18 zurück in das Fluidreservoir 12 strömen.

Die Spielfrei-Vorrichtung 10 umfasst einen Differenzkolben 38, mit einer Kolben-Reservoirfläche 38a, auf welche der im Fluidreservoir 12 wirkende Fluiddruck wirken kann.

Der Differenzkolben 38 ist vorzugsweise längs einer Bewegungsachse B hin- und herbeweglich und weist eine bezüglich der Bewegungsachse B der Kolben-Reservoirfläche entgegengesetzte Kolben-Arbeitsfläche 38b auf, welche mit einem arbeitskammerseitigen Fluiddruck beaufschlagbar ist, der nach nach Maßgabe des in der Arbeitskammer 14, genauer im Arbeitsraum 14a, herrschenden Fluiddruck gebildet ist.

In dem in Fig. 1 dargestellten bevorzugten Ausführungsbeispiel ist die Bewegungsachse B vorzugsweise zur Kolbenachse K gleichgerichtet, im Wesentlichen kollinear.

Um zu verhindern, dass der für den Bewegungsraum des Differenzkolbens 38 bereitgestellte Bewegungsraum 40 sich nicht allmählich mit inkompressiblen Fluid füllt und so eine Funktion des Differenzkolbens 38 erschwert oder sogar unmöglich macht, kann vorgesehen sein, dass der Differenzkolben 38 von dem inkompressiblen Fluid des Fluidreservoirs 12 durch eine erste Kolbenmembran 42 getrennt ist, welche den Differenzkolben 38 und insbesondere einen bis zum Bewegungsraum 40 reichenden Spalt auf der Seite der Reservoirfläche 38a vollständig überspannt.

Hierzu kann vor allen Dingen vorgesehen sein, dass die erste Kolbenmembran 42 am ringförmigen Lagerteil 44 des Differenzkolbens 38 radial außerhalb des Differenzkolbens 38 umlaufend festgelegt ist.

Die erste Kolbenmembran 42 kann eine Elastomermembran sein, welche mit dem Lagerteil 44 verklebt sein kann, oder welche zwischen dem Lagerteil 44 und der Ankerscheibe 24 mechanisch geklemmt ist, gegebenenfalls unter Unterstützung eines Formschlusseingriffs zwischen der ersten Kolbenmembran 42 und einem der Bauteile aus Lagerteil 44 und Ankerscheibe 24, oder die erste Kolbenmembran 44 kann eine Metallmembran sein, welche mit dem Lagerteil 44, welches vorzugsweise aus Stahl oder wenigstens einem Metall hergestellt ist, verlötet oder sogar verschweißt sein kann.

Zur möglichst unmittelbaren Kraftübertragung einer Fluidkraft aus dem Fluidreservoir 12 auf die Kolben-Reservoirfläche 38a des Differenzkolbens 38 steht die Kolben-Reservoirfläche 38a vorteilhafterweise in Berührkontakt mit der ersten Kolbenmembran 42.

Zur Abdichtung des Bewegungsraums 40 auf der Seite der Arbeitskammer 14 kann vorgesehen sein, dass die Kolben-Arbeitsfläche 38b und insbesondere ein sie umgebender, bis zum Bewegungsraum 40 reichender Spalt vollständig von einer zweiten Kolbenmembran 46 überspannt sind. Für die zweite Kolbenmembran 46 gilt das oben zur ersten Kolbenmembran 42 Gesagte entsprechend. Auch hier kann insbesondere daran gedacht sein, dass die zweite Kolbenmembran 46 und die ihr zugeordnete Kolben-Arbeitsfläche 38b des Differenzkolbens 38 unmittelbar einander benachbart angeordnet sind.

Die Ventilanordnung 20 umfasst einen in der Fluidströmungsverbindung 18 gelegenen Ventilkörper 48, welcher vorteilhafterweise über eine Ventilfeder 50 von der Arbeitskammer 14 weg zu einer Ventilsitzplatte 52 vorgespannt ist, welche einen Ventilsitz bildet.

Der Ventilkörper 48 ist vorzugsweise längs einer Verlagerungsachse V zwischen zwei Endstellungen verlagerbar.

Der Ventilkörper 48 weist in dem dargestellten Beispiel vorzugsweise eine mit einem reservoirseitigen Fluiddruck nach Maßgabe des im Fluidreservoir 12 herrschenden Fluiddrucks beaufschlagbare Ventil-Reservoirfläche 48a auf, und weist eine bezüglich der Verlagerungsachse V der Ventil-Reservoirfläche 48a entgegengesetzte Ventil-Arbeitsfläche 48b auf.

Die Ventil-Arbeitsfläche 48b ist durch einen arbeitskammerseitigen Fluiddruck nach Maßgabe des in der Arbeitskammer 14, insbesondere im Arbeitsraum 14a, herrschenden Fluiddrucks beaufschlagbar.

Die Ventil-Reservoirfläche 48a kann über einen Sackleitungabschnitt 18a der Fluidströmungsverbindung und einen mit diesem in Strömungsverbindung stehenden Ringraum 18b in Kontakt mit dem Fluid im Fluidreservoir 12 stehen.

An der Fluidreservoirfläche 48a, welche wie in dem in Fig. 1 gezeigten Ausführungsbeispiel ringförmig ausgebildet sein kann, kann die Ventilgeometrie 54 ausgebildet sein, beispielsweise an dem radial inneren Rand der Ventil-Reservoirfläche 48a. Dies hat den Vorteil, dass der Bereich der Ventil-Reservoirfläche 38a, welcher radial außerhalb der Ventilgeometrie 54 gelegen ist, durch das im Ringraum 18b befindliche inkompressible Fluid erreichbar ist, so dass der reservoirseitige Fluiddruck auf die Ventil-Reservoirfläche 38a einwirken kann.

Axial zwischen dem Differenzkolben 38 und dem Ventilkörper 48 kann, vorzugsweise schwimmend, ein längs einer Verstellachse U hin- und herverstellbarer Ventilkolben 58 angeordnet sein.

Die Verstellachse U ist zur Bewegungsachse B des Differenzkolbens 38 vorteilhafterweise ebenso kollinear wie die Verlagerungsachse V des Ventilkörpers 48.

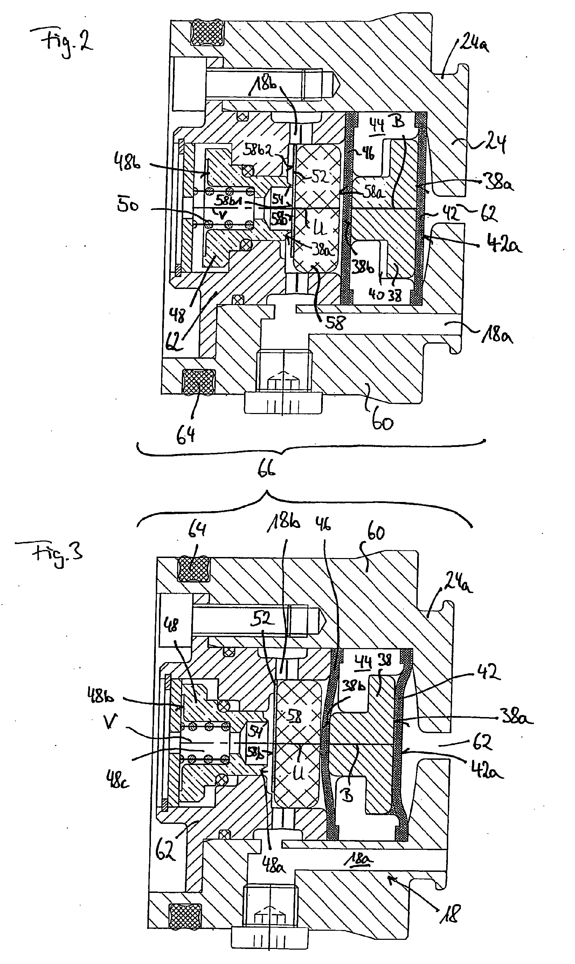

Der Ventilkolben 58 ist vorzugsweise derart angeordnet, dass eine erste Ventilkolbenseite zum Differenzkolben 38 bzw. zur zweiten Kolbenmembran 46 hinweist, und dass eine der ersten Ventilkolbenseite 58a bezüglich der Verstellachse U entgegengesetzte zweite Ventilkolbenseite 58b (siehe in Figuren 2 und 3) zum Ventilkörper 48 hinweist.

Die zuvor erwähnte Ventilsitzplatte 52, welche in dem in den Figuren 1 bis 3 dargestellten Ausführungsbeispiel vorteilhafterweise den Ventilsitz für die Ventilgeometrie 54 bildet, ist an der zweiten Ventilkolbenseite 58b vorgesehen.

In den Figuren 2 und 3 ist der Abschnitt der Spielfrei-Vorrichtung 10 mit dem Ventilkörper 48, dem Ventilkolben 58 und dem Differenzkolben 38 sowie dem diese Elemente umgebenden Gehäuseteil 60 vergrößert dargestellt. Das Gehäuseteil 60 kann ein weiteres Gehäuseteil 62 aufnehmen, in welchem unter anderem der Ventilkörper 48, die Ventilfeder 50, die Ventilsitzplatten 52 und der Ventilkolben 58 zur Bildung einer vormontierten Baugruppe 66 aufgenommen sein können. Vorteilhafterweise ist das Gehäuse aus den Gehäuseteilen 60 und 62 im Arbeitszylinder 33 aufgenommen und durch die Dichtung 64 gegenüber diesem abgedichtet.

Die Fig. 2 zeigt die Spielfrei-Vorrichtung 10 in einem sogenannten "drucklosen Zustand", in welchem weder im Arbeitsraum 14a der Arbeitskammer 14 noch im Fluidreservoir 12 ein vom Atmosphärendruck im Wesentlichen verschiedener Druck herrscht.

Der Differenzkolben 38 ist in diesem Zustand vorteilhafterweise durch die ihn axial einschließenden Kolbenmembrane 42 und 46 in der in Fig. 2 gezeigten fluidreservoirnäheren Stellung gehalten. Durch die Öffnung 62 in der Ankerscheibe 24 ist die vom Differenzkolben 38 weg weisende Seite 42a der ersten Kolbenmembran 42 vom Fluid des Fluidreservoirs 12 benetzt, so dass der im Fluidreservoir 12 herrschende Fluiddruck auf die erste Kolbenmembran 42 und damit auf die Kolben-Reservoirfläche 38a wirken kann.

Wird nun, wie in Fig. 3 dargestellt, der die Hüllmembran 22 außen umgebende Druckluftraum 30 mit Druckluft beaufschlagt, so wird durch den erhöhten Fluiddruck die erste Kolbenmembran 42 und mit ihr der Differenzkolben 38 vom Fluidreservoir 12 weg verlagert, bis der Differenzkolben 38 vorteilhafterweise an dem ihn lagernden Lagerring 44 anliegt.

Der Differenzkolben 38 verschiebt dann bei der in den Figuren 1 bis 3 gezeigten Ausführungsform mit seiner Kolben-Arbeitsfläche 38b die zweite Kolbenmembran 46 längs der Bewegungsachse B vom Fluidreservoir 12 weg zur Arbeitskammer 14 hin.

Dabei stößt die vom Differenzkolben 38 zur Arbeitskammer 14 hin verlagerte zweite Kolbenmembran an den schwimmend aufgenommenen Ventilkolben 58 und verlagert diesen ebenfalls vom Fluidreservoir 12 weg in Richtung zur Arbeitskammer 14 hin.

Gleichzeitig erreicht der im Fluidreservoir 12 herrschende Fluiddruck über die Sackleitung 18a und den Ringraum 18b die Ventil-Reservoirfläche 48a.

Dann, wenn der auf die Ventil-Reservoirfläche 48a einwirkende reservoirseitige Fluiddruck um ein erstes Maß höher ist als der auf die Ventil-Arbeitsfläche 48b wirkende arbeitskammerseitige Fluiddruck (die Vorspannkraft der Ventilfeder 50 soll hierfür vernachlässigt werden), wird der Ventilkörper 48 aufgrund der an ihm angreifenden Kräfte entlang der Verlagerungsachse von der Ventilplatte 52 weg zur Arbeitskammer 14 hin verlagert, so dass Fluid aus dem Ringraum 18b über den zwischen der Ventilgeometrie 54 und Ventilplatte 52 entstandenen Ringspalt entlang der zentralen Ausnehmung 48c im Ventilkörper 48 in den Arbeitsraum 14a strömen kann.

Dieser Strömungsvorgang dauert solange an, bis ein arbeitskammerseitiger Fluiddruck auf die Ventil-Arbeitsfläche 48b einwirkt und eine Kraft erzeugt, welche (zusammen mit der Federkraft der Ventilfeder 50) gegen die aus der an der Ventil-Reservoir-Fläche 48a resultierende Druckkraft den Ventilkolben 58 solange zur Ventilplatte 52 hin verstellt, bis die Ventilgeometrie 54 an der Ventilplatte 52 anliegt und der zuvor entstandene Ringspalt geschlossen ist.

In der dann erreichten Stellung wird vorteilhafterweise der Ventilkolben 58 zwischen dem Differenzkolben 38, genauer der zweiten Kolbenmembran 46, und dem Ventilkörper 48 eingeklemmt.

Die radial innerhalb der Ventilgeometrie 54 gelegene Teilfläche 58b1 der zweiten Ventilkolbenseite 58b ist vorteilhafterweise über den zentralen Durchgang 48c mit dem im Arbeitsraum 14a der Arbeitskammer 14 herrschenden Fluiddruck beaufschlagt.

Der radial außerhalb der Ventilgeometrie 54 gelegene Teilabschnitt 58b2 (siehe Fig. 2) der zweiten Ventilkolbenfläche 58b des Ventilkolbens 58 ist dagegen vorteilhafterweise über den Ringraum 18b mit einem reservoirseitigen Fluiddruck beaufschlagt. In die entgegengesetzte Richtung übt der Differenzkolben 38 über seine Kolben-Arbeitsfläche 38b und die zweite Kolbenmembran 46 eine Kraft auf den Ventilkolben 58 aus.

Steigt nun der Fluiddruck im Arbeitsraum 14 an, etwa weil ein Zug aus einem Zugfahrzeug und einem an dieses angekuppelten Nachlauffahrzeug verzögert wird, so dass die nicht dargestellte Zugöse des Nachlauffahrzeugs mit einer dynamischen Verzögerungskraft gegen das Längsende 36a des Stoppprismas drückt und damit den Arbeitskolben 34 im Sinne einer Volumenverkleinerung des Arbeitsraums 14a zu verlagern versucht, steigt mit dem Fluiddruck im Arbeitsraum 14a auch die auf die Teilfläche 58b1 aufgrund des arbeitskammerseitigen Fluiddrucks auf den Ventilkolben 58 einwirkende Kraft, welche in einer Richtung von der Ventilgeometrie 54 weg wirkt.

Obwohl aufgrund der großen Masse von Nachlauffahrzeugen beim Verzögern eines Zuges der Fluiddruck im Arbeitsraum 14a deutlich höher sein kann als der Fluiddruck im Fluidreservoir 12, wird aufgrund der verglichen mit der Kolben-Arbeitsfläche 38b deutlich größeren Kolben-Reservoirfläche 38a der Ventilkolben 58 solange mit der Ventilplatte 52 in Anlage an der Ventilgeometrie 54 des Ventilkörpers 48 gehalten, bis der Fluiddruck in der Arbeitskammer 14, genauer im Arbeitsraum 14a, ein vorbestimmtes zweites Maß über den Fluiddruck in der Reservoirkammer 12 hinaus angestiegen ist. Erst dann reicht die auf den Ventilkolben 58 vom arbeitskammerseitigen Fluiddruck ausgeübte Kraft aus, die entgegengesetzt gerichtete durch den Differenzkolben 38 und den reservoirseitigen Fluiddruck bewirkte Haltekraft zu überwinden.

Der Ventilkolben 58 wird dann aufgrund des auf seine zweite Ventilkolbenseite 58b einwirkenden arbeitskammerseitigen Fluiddruck von der Ventilgeometrie 54 weg verlagert, so dass erneut ein Ringspalt zwischen der Ventilgeometrie 54 und der Ventilsitzplatte 52 entsteht, durch den nun aufgrund des höheren Drucks im Arbeitsraum 14a inkompressibles Fluid vom Arbeitsraum 14a in das Fluidreservoir 12 strömt. Durch diesen Strömungsvorgang wird der Druck im Arbeitsraum 14a abgebaut.

Früher oder später ist der Druckunterschied zwischen dem arbeitskammerseitigen Fluiddruck und dem reservoirseitigen Fluiddruck nicht mehr groß genug, um den Ventilkolben 58 gegen die Kraft des Differenzkolbens 38 von der Ventilgeometrie 54 abzuheben. Der Ringspalt zwischen Ventilgeometrie 54 und Ventilplatte 52 wird dann wieder geschlossen.

Fährt der Zug aus dem Stillstand an, endet eine Kraftwirkung der Zugöse auf das Stoppprisma 36, so dass der Fluiddruck in der Arbeitskammer 14, genauer im Arbeitsraum 14a, den Atmosphärendruck im Wesentlichen nicht übersteigt. Da das Fluidreservoir 12 weiterhin mit der pneumatischen Systemkraft beaufschlagt ist, strömt inkompressibles Fluid dann, wenn der reservoirseitige Fluiddruck den arbeitskammerseitigen Fluiddruck um das vorbestimmte erste Maß übersteigt, wieder vom Fluidreservoir 12 in den Arbeitsraum 14a und verlagert den Arbeitskolben 34 solange entlang der Kolbenachse K, bis das Stoppprisma 36 die Zugöse spielfrei an den Kupplungsbolzen angelegt hat.

Durch die Größe der Kolben-Reservoirfläche 38a, der Kolben-Arbeitsfläche 38b sowie der im Strömungssperrzustand der Ventilanordnung 20 vom arbeitskammerseitigen Fluiddruck beaufschlagten Teilfläche 58b1 der zweiten Ventilkolbenseite 58b, kann das vorbestimmte zweite Maß an Überdruck des arbeitskammerseitigen Fluiddrucks gegenüber dem reservoirseitigen Fluiddruck eingestellt werden.

Durch die Größe der Ventil-Reservoirfläche 48a, der Ventil-Arbeitsfläche 48b und durch die Federhärte der Ventilfeder 50 kann das vorbestimmte erste Maß an Überdruck des reservoirseitigen Fluiddrucks gegenüber dem arbeitskammerseitigen Fluiddruck eingestellt werden, bei welchem die Ventilanordnung 20 eine Fluidströmung vom Fluidreservoir 12 in den Arbeitsraum 14a gestattet.

Die in den Figuren 2 und 3 dargestellte Baugruppe ist eine vormontierte oder vormontierbare Baugruppe 66, welche wenigstens die Gehäuseteile 60 und 62, den Differenzkolben 38 und den Ventilkörper 48 umfasst.

Eine derartige vormontierte Baugruppe 66 kann vor dem Einbau in den Arbeitszylinder 33 oder in ein anderes Gehäuse auf seine ordentliche Funktion getestet werden.

Vorzugsweise umfasst die Baugruppe 66 jedoch alle in den Figuren 2 und 3 dargestellten Bauteile.

## Patentansprüche

1. Spielfrei-Vorrichtung für eine Anhängerkupplung zur spielfreien Anlage einer Kupplungsgeometrie an einen diese formschlüssig ankuppelnden Kupplungsbolzen, die Spielfrei-Vorrichtung umfassend:
- ein Fluidreservoir (12) mit einem darin aufgenommenen inkompressiblen Fluid,
- eine Arbeitskammer (14) mit einem darin beweglich aufgenommenen Arbeitskolben (34),
- einen längs einer Bewegungsachse (B) beweglichen Differenzkolben (38) mit einer Kolben-Reservoirfläche (38a), auf welche ein reservoirseitiger Fluiddruck nach Maßgabe des im Fluidreservoir (12) herrschenden Fluiddrucks einwirkt, um eine in einer ersten Bewegungsrichtung längs der Bewegungsachse (B) auf den Differenzkolben (38) wirkende erste Bewegungskraft zu erzeugen, und mit einer von der Kolben-Reservoirfläche (38a) abweichenden, vorzugsweise kleineren Kolben-Arbeitsfläche (38b), welche durch einen arbeitskammerseitigen Fluiddruck nach Maßgabe des in der Arbeitskammer (14) herrschenden Fluiddrucks beaufschlagbar ist, um eine in einer der ersten entgegengesetzten zweiten Bewegungsrichtung auf den Differenzkolben (38) wirkende zweite Bewegungskraft zu erzeugen,
- eine die Arbeitskammer (14) und das Fluidreservoir (12) miteinander fluidströmungsmäßig verbindende Fluidströmungsverbindung (18) mit einer Ventilanordnung (20), welche zumindest im abschnittsweisen Zusammenwirken mit dem Differenzkolben (38) dazu ausgebildet ist, dann, wenn der reservoirseitige Fluiddruck wenigstens ein vorbestimmtes erstes Maß höher ist als der arbeitskammerseitige Fluiddruck, eine Fluidströmung von dem Fluidreservoir (12) in die Arbeitskammer (14) zu gestatten, sowie dann, wenn der arbeitskammerseitige Fluiddruck wenigstens ein vorbestimmtes zweites Maß höher ist als der reservoirseitige Fluiddruck, eine Fluidströmung von der Arbeitskammer (14) in das Fluidreservoir (12) zu gestatten, und ansonsten eine Fluidströmung in der Fluidströmungsverbindung (18) zwischen Arbeitskammer (14) und Fluidreservoir (12) im Wesentlichen zu unterbinden, **dadurch gekennzeichnet, dass** die Fluidströmungsverbindung (18) einen betriebsmäßig sowohl vom Fluidreservoir (12) zur Arbeitskammer (14) hin als auch von der Arbeitskammer (14) zum Fluidreservoir (12) hin durchströmbaren Leitungsabschnitt (bei 18b) umfasst, in welchem ein Ventilsitz (bei 52) und eine mit dem Ventilsitz (bei 52) zusammenwirkende Ventilgeometrie (54) eines Ventilkörpers (48) der Ventilanordnung (20) aufgenommen sind.

2. Spielfrei-Vorrichtung nach Anspruch 1,
**dadurch gekennzeichnet, dass** das Fluidreservoir (12) zumindest abschnittsweise von einer verformbaren Hüllmembran (22) begrenzt ist, deren eine Hüllmembranseite mit dem Fluid benetzt ist und deren entgegengesetzte andere Hüllmembranseite durch eine Systemkraft, vorzugsweise eine pneumatische Systemkraft, beaufschlagt oder wahlweise beaufschlagbar ist.

3. Spielfrei-Vorrichtung nach Anspruch 1 oder 2,
**dadurch gekennzeichnet, dass** zwischen dem Fluid im Fluidreservoir (12) und dem Differenzkolben (38) eine erste Kolbenmembran (42) angeordnet ist, wobei vorzugsweise deren eine Kolbenmembranseite von Fluid benetzt ist und deren entgegengesetzte andere Kolbenmembranseite zur Kolben-Reservoirfläche (38a) hinweist, besonders bevorzugt in Berührkontakt mit dieser steht.

4. Spielfrei-Vorrichtung nach einem der Ansprüche 1 bis 3,
**dadurch gekennzeichnet, dass** die Kolben-Arbeitsfläche (38b) und insbesondere ein den Differenzkolben (38) arbeitsflächenseitig umgebender Spalt durch eine zweite Kolbenmembran (46) bedeckt ist.

5. Spielfrei-Vorrichtung nach einem der vorhergehenden Ansprüche,
**dadurch gekennzeichnet, dass** der die Ventilgeometrie (54) aufweisende Ventilkörper (48) längs einer Verlagerungsachse (V) verlagerbar ist.

6. Spielfrei-Vorrichtung nach Anspruch 5,
**dadurch gekennzeichnet, dass** der Ventilkörper (48) eine Ventil-Reservoirfläche (48a) aufweist, auf welche ein reservoirseitiger Fluiddruck nach Maßgabe des im Fluidreservoir (12) herrschenden Fluiddrucks einwirkt, um eine in einer ersten Verlagerungsrichtung längs der Verlagerungsachse (V) auf den Ventilkörper (48) wirkende erste Verlagerungskraft zu erzeugen, und dass der Ventilkörper (48) eine Ventil-Arbeitsfläche (48b) aufweist, auf welche ein arbeitskammerseitiger Fluiddruck nach Maßgabe des in der Arbeitskammer (14) herrschenden Fluiddrucks einwirkt, um eine in einer der ersten entgegengesetzten zweiten Verlagerungsrichtung auf den Ventilkörper (48) wirkende zweite Verlagerungskraft zu erzeugen.

7. Spielfrei-Vorrichtung nach Anspruch 6,
**dadurch gekennzeichnet, dass** die Ventilgeometrie (54) an der Ventil-Reservoirfläche (48a) vorgesehen ist.

8. Spielfrei-Vorrichtung nach Anspruch 6 oder 7,
**dadurch gekennzeichnet, dass** die Ventil-Reservoirfläche (48a) einen von der Ventil-Arbeitsfläche (48b) abweichenden, vorzugsweise einen kleineren Flächeninhalt aufweist.

9. Spielfrei-Vorrichtung nach einem der vorhergehenden Ansprüche,
**dadurch gekennzeichnet, dass** der Ventilkörper (48) durch eine Ventilfederanordnung (50) zum Ventilsitz (bei 52) hin vorgespannt ist.

10. Spielfrei-Vorrichtung nach einem der vorhergehenden Ansprüche,
**dadurch gekennzeichnet, dass** der Ventilsitz (bei 52) nach Maßgabe der Stellung des längs der Bewegungsachse (B) beweglichen Differenzkolbens (38) verstellbar ist.

11. Spielfrei-Vorrichtung nach Anspruch 10,
**dadurch gekennzeichnet, dass** zwischen dem Ventilkörper (48) und dem Differenzkolben (38) ein Ventilkolben (58) vorgesehen ist, welcher zur Annäherung an den und zur Entfernung von dem Differenzkolben (38) sowie zur Annäherung an den und zur Entfernung von dem Ventilkörper (48) längs einer Verstellachse (U) verstellbar vorgesehen ist, wobei eine erste Ventilkolbenseite (58a) zum Differenzkolben (38) hinweist und eine zweite Ventilkolbenseite (58b) zum Ventilkörper (48) hinweist.

12. Spielfrei-Vorrichtung nach Anspruch 11,
**dadurch gekennzeichnet, dass** die Kolben-Arbeitsfläche (38b) durch den Ventilkolben (58) mit dem arbeitskammerseitigen Fluiddruck beaufschlagbar ist.

13. Spielfrei-Vorrichtung nach Anspruch 11 oder 12,
**dadurch gekennzeichnet, dass** der Ventilsitz (bei 52) an der zweiten Ventilkolbenseite (58b) vorgesehen ist.

14. Spielfrei-Vorrichtung nach einem der vorhergehenden Ansprüche,
**dadurch gekennzeichnet, dass** der Ventilsitz (bei 52) derart ausgebildet ist, dass bei auf dem Ventilsitz (bei 52) aufsitzender Ventilgeometrie (54) eine erste Teilfläche (58b1) des Ventilsitzes (bei 52), insbesondere der zweiten Ventilkolbenseite (58b), mit einem arbeitskammerseitigen Fluiddruck beaufschlagt ist und eine von der ersten verschiedenen zweite Teilfläche (58b2) des Ventilsitzes (bei 52), insbesondere der zweiten Ventilkolbenseite (58b), mit einem reservoirseitigen Fluiddruck beaufschlagt ist.

15. Spielfrei-Vorrichtung nach einem der vorhergehenden Ansprüche,
**dadurch gekennzeichnet, dass** die Bewegungsachse (B) und die Verlagerungsachse (V) oder/und die Verstellachse (U) im Wesentlichen in dieselbe Richtung verlaufen, vorzugsweise kollinear sind.

16. Spielfrei-Vorrichtung nach einem der vorhergehenden Ansprüche,
**dadurch gekennzeichnet, dass** der Differenzkolben (38) und der Ventilkörper (48), vorzugsweise unter Zwischenanordnung des Ventilkolbens (58), besonders bevorzugt unter Anordnung des Differenzkolbens (38) bezogen auf die Bewegungsachse (B) zwischen der ersten Kolbenmembran (42) und der zweiten Kolbenmembran (46), vorteilhafterweise unter Einbeziehung der Ventilfederanordnung (50) oder/und einer Ventilsitzplatte (52), in einem, gegebenenfalls mehrseitigen, Gehäuse (60, 62) zu einer vormontierten Baugruppe zusammengefasst sind.

## Claims

1. A backlash-free apparatus for a trailer coupling for the backlash-free application of a coupling geometry to a coupling pin to be coupled up thereto in a form-locking manner, the backlash-free apparatus comprising:
- a fluid reservoir (12) with an incompressible fluid accommodated therein,
- a working chamber (14) with a working piston (34) accommodated to move therein,
- a differential piston (38) which can move along a movement axis (B) and with a piston reservoir surface (38a) on which a fluid pressure on the reservoir side acts according to the fluid pressure prevailing in the fluid reservoir (12) so as to generate a first movement force acting on the differential piston (38) in a first movement direction along the movement axis (B), and with a preferably smaller piston working surface (38b) which deviates from the piston reservoir surface (38a) and which can be acted upon by a fluid pressure on the working chamber side according to the fluid pressure prevailing in the working chamber (14) so as to generate a second movement force acting on the differential piston (38) in a second movement direction opposed to the first,
- a fluid flow connection (18) interconnecting in respect of fluid flow the working chamber (14) and the fluid reservoir (12), with a valve assembly (20) which at least in co-operation in sections with the differential piston (38) is designed, when the fluid pressure on the reservoir side is higher by at least a predetermined first amount than the fluid pressure on the working chamber side, to allow a fluid flow from the fluid reservoir (12) into the working chamber (14), as well as when the fluid pressure on the working chamber side is higher by at least a predetermined second amount than the fluid pressure on the reservoir side, to allow a fluid flow from the working chamber (14) into the fluid reservoir (12), and otherwise substantially to prevent a fluid flow in the fluid flow connection (18) between the working chamber (14) and the fluid reservoir (12), **characterised in that** the fluid flow connection (18) comprises a duct section (at 18b) through which flow is possible in operation both from the fluid reservoir (12) towards the working chamber (14) and also from the working chamber (14) towards the fluid reservoir (12), and in which are accommodated a valve seat (at 52) and a valve geometry (54) of a valve body (48) of the valve assembly (20) co-operating with the valve seat (at 52).

2. A backlash-free apparatus according to Claim 1,
**characterised in that** the fluid reservoir (12) is bounded at least in sections by a deformable casing diaphragm (22), one casing diaphragm side of which is wetted with the fluid and the opposing other casing diaphragm side of which is acted upon, or alternatively can be acted upon, by a system force, preferably a pneumatic system force.

3. A backlash-free apparatus according to Claim 1 or 2,
**characterised in that** a first piston diaphragm (42) is arranged between the fluid in the fluid reservoir (12) and the differential piston (38), wherein preferably one piston diaphragm side of which is wetted and the opposing other piston diaphragm side of which points towards the piston reservoir surface (38a), especially preferably is in touching contact therewith.

4. A backlash-free apparatus according to one of Claims 1 to 3,
**characterised in that** the piston working surface (38b) and in particular a clearance surrounding the differential piston (38) on the working surface side is covered by a second piston diaphragm (46).

5. A backlash-free apparatus according to any one of the preceding Claims, **characterised in that** the valve body (48) having the valve geometry (54) can be displaced along a displacement axis (V).

6. A backlash-free apparatus according to Claim 5,
**characterised in that** the valve body (48) has a valve reservoir surface (48a), on which acts a fluid pressure on the reservoir side according to the fluid pressure prevailing in the fluid reservoir (12) so as to generate a displacement force acting on the valve body (48) in a first displacement direction along the displacement axis (V), and **in that** the valve body (48) has a valve working surface (48b), on which a fluid pressure on the working chamber side acts according to the fluid pressure prevailing in the working chamber (14) so as to generate a second displacement force acting on the valve body (48) in a second displacement direction opposed to the first.

7. A backlash-free apparatus according to Claim 6,
**characterised in that** the valve geometry (54) is provided on the valve reservoir surface (48a).

8. A backlash-free apparatus according to Claim 6 or 7,
**characterised in that** the valve reservoir surface (48a) has a preferably smaller surface area deviating from the valve working surface (48b).

9. A backlash-free apparatus according to any one of the preceding Claims, **characterised in that** the valve body (48) is biased towards the valve seat (at 52) by a valve spring assembly (50).

10. A backlash-free apparatus according to any one of the preceding Claims, **characterised in that** the valve seat (at 52) can be adjusted according to the position of the differential piston (38) movable along the movement axis (B).

11. A backlash-free apparatus according to Claim 10,
**characterised in that** a valve piston (58) is provided between the valve body (48) and the differential piston (38), which is provided so that it can be adjusted to approach and move away from the differential piston (38), as well as to approach and move away from the valve body (48) along an adjustment axis (U), wherein a first valve piston side (58a) points towards the differential piston (38) and a second valve piston side (58b) points towards the valve body (48).

12. A backlash-free apparatus according to Claim 11,
**characterised in that** the piston working surface (38b) can be acted upon with the fluid pressure on the working chamber side by the valve piston (58).

13. A backlash-free apparatus according to Claim 11 or 12,
**characterised in that** the valve seat (at 52) is provided on the second valve piston side (58b).

14. A backlash-free apparatus according to any one of the preceding Claims, **characterised in that** the valve seat (at 52) is so formed that with valve geometry (54) seated on the valve seat (at 52) a first partial surface (58b1) of the valve seat (at 52), in particular the second valve piston side (58b), can be acted upon with a fluid pressure on the working chamber side and a second partial surface (58b2) of the valve seat (at 52) different from the first, in particular the second valve piston side (58b), can be acted upon with a fluid pressure on the reservoir side.

15. A backlash-free apparatus according to any one of the preceding Claims, **characterised in that** the movement axis (B) and the displacement axis (V) and/or the adjustment axis (U) extend substantially in the same direction, preferably are collinear.

16. A backlash-free apparatus according to any one of the preceding Claims, **characterised in that** the differential piston (38) and the valve body (48), preferably with interposition of the valve piston (58), especially preferably with the differential piston (38) arranged in relation the movement axis (B) between the first piston diaphragm (42) and the second piston diaphragm (46), advantageously including the valve spring assembly (50) and/or the valve seat plate (52), are combined in an optionally multisided housing (60,62) to form a preassembled unit.

## Revendications

1. Dispositif sans jeu pour un attelage destiné à l'appui sans jeu d'une géométrie d'attelage contre un boulon d'attelage l'attelant positivement, le dispositif sans jeu comportant :
- un réservoir fluidique (12) recevant un fluide incompressible,
- une chambre de travail (14) recevant de manière mobile un piston de travail (34),
- un piston différentiel (38) mobile le long d'un axe de déplacement (B) avec une surface de réservoir de piston (38a), sur laquelle agit une pression fluidique côté réservoir suivant la pression fluidique régnant dans le réservoir fluidique (12) afin de générer une première force de déplacement agissant dans un premier sens de déplacement le long de l'axe de déplacement (B) sur le piston différentiel, et avec une surface de travail de piston (38b) de préférence plus petite, divergeant de la surface de réservoir de piston (38a) qui peut être alimentée par une pression fluidique côté chambre de travail suivant la pression fluidique régnant dans la chambre de travail (14) afin de générer une seconde force de déplacement agissant dans un second sens de déplacement opposé au premier sur le piston différentiel (38),
- une liaison d'écoulement de fluide (18) reliant par écoulement fluidique la chambre de travail (14) et le réservoir fluidique (12) avec un ensemble de soupape (20) réalisé au moins de sorte à coopérer par section avec le piston différentiel (38) si au moins une première étendue prédéterminée de la pression fluidique côté réservoir est supérieure à celle de la pression fluidique côté chambre de travail afin de permettre un écoulement fluidique du réservoir fluidique (12) à la chambre de travail (14), ainsi que, si au moins une seconde étendue prédéterminée de la pression fluidique côté chambre de travail est supérieure à la pression fluidique côté réservoir, afin de permettre un écoulement fluidique de la chambre de travail (14) au réservoir fluidique (12) et sinon de supprimer sensiblement un écoulement fluidique dans la liaison d'écoulement de fluide (18) entre la chambre de travail (14) et le réservoir fluidique (12),
**caractérisé en ce que** la liaison d'écoulement de fluide (18) comporte une section de conduite (pour 18b) pouvant passer de façon adaptée au fonctionnement non seulement du réservoir fluidique (12) à la chambre de travail (14) mais aussi de la chambre de travail (14) au réservoir fluidique (12), laquelle renferme un siège de soupape (pour 52) et une géométrie de soupape (54) coopérant avec le siège de soupape (pour 52) d'un corps de soupape (48) de l'ensemble de soupape (20).

2. Dispositif sans jeu selon la revendication 1,
**caractérisé en ce que** le réservoir fluidique (12) est délimité au moins par sections par une membrane enveloppante (22) déformable, dont un côté est mouillé par le fluide et dont l'autre côté opposé est alimenté ou au choix peut être alimenté par une force système, de préférence une force système pneumatique.

3. Dispositif sans jeu selon la revendication 1 ou 2,
**caractérisé en ce qu'**une première membrane de piston (42) est disposée entre le fluide dans le réservoir fluidique (12) et le piston différentiel (38), un côté de membrane de piston étant mouillé de préférence par le fluide et son autre côté opposé étant dirigé vers la surface de réservoir de piston (38a), se trouvant de préférence en contact avec celle-ci.

4. Dispositif sans jeu selon l'une quelconque des revendications 1 à 3,
**caractérisé en ce que** la surface de travail de piston (38b) et en particulier une fente entourant le piston différentiel (38) côté surface de travail est recouverte par une seconde membrane de piston (46).

5. Dispositif sans jeu selon l'une quelconque des revendications précédentes,
**caractérisé en ce que** le corps de soupape (48) présentant la géométrie de soupape (54) peut être déplacé le long d'un axe de déplacement (V).

6. Dispositif sans jeu selon la revendication 5,
**caractérisé en ce que** le corps de soupape (48) présente une surface de réservoir de soupape (48a), sur laquelle agit une pression fluidique côté réservoir suivant la pression fluidique régnant dans le réservoir fluidique (12) afin de générer une première force de déplacement agissant dans un premier sens de déplacement le long de l'axe de déplacement (V) sur le corps de soupape (48), et **en ce que** le corps de soupape (48) présente une surface de travail de soupape (48b), sur laquelle agit une pression fluidique côté chambre de travail suivant la pression fluidique régnant dans la chambre de travail (14) afin de générer une seconde force de déplacement agissant dans un second sens de déplacement opposé au premier sur le corps de soupape (48).

7. Dispositif sans jeu selon la revendication 6,
**caractérisé en ce que** la géométrie de soupape (54) est prévue sur la surface de réservoir de soupape (48a).

8. Dispositif sans jeu selon la revendication 6 ou 7,
**caractérisé en ce que** la surface de réservoir de soupape (48a) présente une superficie divergeant de la surface de travail de soupape (48b), de préférence une plus petite superficie.

9. Dispositif sans jeu selon l'une quelconque des revendications précédentes,
**caractérisé en ce que** le corps de soupape (48) est précontraint par un ensemble de ressort de soupape (50) vers le siège de soupape (pour 52).

10. Dispositif sans jeu selon l'une quelconque des revendications précédentes,
**caractérisé en ce que** le siège de soupape (pour 52) peut être réglé suivant la position du piston différentiel (38) mobile le long de l'axe de déplacement (B).

11. Dispositif sans jeu selon la revendication 10,
**caractérisé en ce qu'**un piston de soupape (58) est prévu entre le corps de soupape (48) et le piston différentiel (38), lequel est prévu de manière réglable pour le rapprochement et l'éloignement du piston différentiel (38) ainsi que pour le rapprochement et l'éloignement du corps de soupape (48) le long d'un axe de réglage (U), un premier côté de piston de soupape (58a) étant dirigé vers le piston différentiel (38) et un second côté de piston de soupape (58b) étant dirigé vers le corps de soupape (48).

12. Dispositif sans jeu selon la revendication 11,
**caractérisé en ce que** la surface de travail de piston (38b) peut être alimentée par le piston de soupape (58) en pression fluidique côté chambre de travail.

13. Dispositif sans jeu selon la revendication 11 ou 12,
**caractérisé en ce que** le siège de soupape (pour 52) est prévu sur le second côté de piston de soupape (58b).

14. Dispositif sans jeu selon l'une quelconque des revendications précédentes,
**caractérisé en ce que** le siège de soupape (pour 52) est réalisé de telle manière que pour une géométrie de soupape (54) logeant sur le siège de soupape (pour 52), une première surface partielle (58b1) du siège de soupape (pour 52), en particulier du second côté de piston de soupape (58b), est alimentée en une pression fluidique côté chambre de travail et une seconde surface partielle (58b2) différente de la première du siège de soupape (pour 52), en particulier du second côté de piston de soupape (58b) est alimentée en une pression fluidique côté réservoir.

15. Dispositif sans jeu selon l'une quelconque des revendications précédentes,
**caractérisé en ce que** l'axe de déplacement (B) et l'axe de déplacement (V) et/ou l'axe de réglage (U) s'étendent sensiblement dans la même direction, sont de préférence colinéaires.

16. Dispositif sans jeu selon l'une quelconque des revendications précédentes,
**caractérisé en ce que** le piston différentiel (38) et le corps de soupape (48) sont réunis de préférence en intercalant le piston de soupape (58), de manière particulièrement préférée en agençant le piston différentiel (38) par rapport à l'axe de déplacement (B) entre la première membrane de piston (42) et la seconde membrane de piston (46), avantageusement en intégrant l'ensemble de ressort de soupape (50) et/ou une plaque de siège de soupape (52) dans un boîtier (60, 62) présentant éventuellement plusieurs côtés pour former un bloc prémonté.
